Europäisches Patentamt

European Patent Office

Office européen des brevets

(11) Veröffentlichungsnummer: **0 057 819**
**B1**

(12) **EUROPÄISCHE PATENTSCHRIFT**

(45) Veröffentlichungstag der Patentschrift:
**14.11.84**

(21) Anmeldenummer: **82100209.4**

(22) Anmeldetag: **14.01.82**

(51) Int. Cl.³: **B 60 S 5/00,** B 60 Q 9/00

(54) Service-Intervall-Anzeigevorrichtung für Kraftfahrzeuge.

(30) Priorität: **06.02.81 DE 3104174**

(43) Veröffentlichungstag der Anmeldung:
**18.08.82 Patentblatt 82/33**

(45) Bekanntmachung des Hinweises auf die Patenterteilung:
**14.11.84 Patentblatt 84/46**

(84) Benannte Vertragsstaaten:
**DE FR GB IT SE**

(56) Entgegenhaltungen:
**US - A - 1 749 365**

(73) Patentinhaber: **BAYERISCHE MOTOREN WERKE
Aktiengesellschaft, Postfach 40 02 40 Petuelring 130,
D-8000 München 40 (DE)**

(72) Erfinder: **Mühlberger, Heinz, Dipl. Ing.,
Donauschwabenstrasse 6, D-8057 Eching (DE)**
Erfinder: **Starmühler, Erwin, Dipl. Ing., Schmuzer
Strasse 1, D-8000 München 70 (DE)**
Erfinder: **Weishaupt, Walter, Ing. grad.,
Memlingstrasse 12, D-8000 München 71 (DE)**
Erfinder: **Flohr, Peter, Harthauser Strasse 23,
D-8000 München 90 (DE)**
Erfinder: **Bourauel, Fritz, Am Grohplatz 1,
D-8000 München 45 (DE)**

(74) Vertreter: **Bullwein, Fritz Bayerische Motoren Werke
Aktiengesellschaft, Postfach 40 02 40 -
AJ-23 Petuelring 130, D-8000 München 40 (DE)**

**Beschreibung**

Die Erfindung bezieht sich auf eine Service-Intervall-Anzeigevorrichtung für Kraftfahrzeuge, die bei Erreichen eines Parameter-Grenzwertes ein Signal liefert.

Bei bekannten derartigen Anzeigevorrichtungen dient als Parameter die zurückgelegte Wegstrecke. Damit wird die tatsächliche Belastung des Fahrzeugmotors, an dem ein Grossteil der Servicearbeiten vollzogen wird, nur völlig unzureichend berücksichtigt. Dies hat zur Folge, dass ein Service meist viel früher durchgeführt wird, als es entsprechend der Motorbelastung bzw. dem Motorverschleiss erforderlich ist. Der Wegstrecken-Grenzwert muss nämlich so bemessen sein, dass der Service auch unter extremen Bedingungen, wie sie beispielsweise bei einem Kaltstart und anschliessender Vollgasfahrt vorkommen, rechtzeitig durchgeführt wird. Ferner werden mit dem Kriterium der Wegstrecke einige besonders verschleissintensive Betriebszustände, wie beispielsweise das Warmlaufen im Stand oder Vollgasfahrten mit kaltem Motor, nicht oder völlig unzureichend berücksichtigt.

Der Erfindung liegt die Aufgabe zugrunde, eine Anzeigevorrichtung der eingangs genannten Art zu schaffen, die auf einen notwendigen Service gerade hinweist, wenn er tatsächlich erforderlich ist.

Die Lösung dieser Aufgabe besteht darin, dass als Parameter der Kraftstoffgesamtverbrauch dient.

Mit diesem Kriterium werden sowohl die genannten extremen Betriebszustände als auch der normale Fahrbetrieb auf überraschend einfache Weise vollständig und mit genauer Zuordnung zum tatsächlichen Motorverschleiss berücksichtigt. Nimmt man beispielsweise die gleiche Geschwindigkeit an, so ist der Kraftstoffverbrauch um so geringer, je schonender der Fahrzeugmotor betrieben wird bzw. um so grösser, je stärker der Fahrzeugmotor belastet wird. Die momentane jeweilige Belastung des Fahrzeugmotors korreliert somit unmittelbar mit dem momentanen Kraftstoffverbrauch. Daraus ergibt sich, dass der Kraftstoffgesamtverbrauch ein gutes Mass für den Gesamtverschleiss des Fahrzeugmotors ist.

Es hat sich gezeigt, dass es für die Zuordnung der Notwendigkeit eines Services zum Verschleiss des Fahrzeugmotors ausreichend ist, den Kraftstoffgesamtverbrauch allein als Parameter zu berücksichtigen. Da heutzutage in Kaftfahrzeugen häufig bereits Kraftstoff-Momentanverbrauchs-Anzeigevorrichtungen vorhanden sind, kann der Gesamtverbrauch in einfacher Weise durch Addition der Momentanverbrauchswerte festgehalten werden. Zur schaltungstechnischen Realisierung der erfindungsgemässen Anzeigevorrichtung ist somit im wesentlichen lediglich ein Speicher vorzusehen.

Um die Funktion der Anzeigevorrichtung mit ggf. vorhandenen gesetzlichen Bestimmungen in Einklang zu bringen, kann aber auch ein weiterer Parameter, beispielsweise die Gesamtwegstrecke, berücksichtigt werden. In einigen Ländern besteht nämlich die Vorschrift, nach Zurücklegen eines vorgegebenen Wegs mit einem Signal auf die Notwendigkeit eines Services hinzuweisen. Ferner kann mit Hilfe des weiteren Parameters möglicherweise eine Verbesserung der obengenannten Zuordnung erzielt werden. Hierzu kann eine Bewertung des momentanen Kraftstoffverbrauchs bei einem extremen Wert des weiteren Parameters erfolgen. Als derartige Parameter sind beispielsweise die Motoröl- und Kühlwassertemperatur bzw. die Motorumdrehungszahl geeignet.

Im Rahmen der Erfindung kann eine weitere vorteilhafte Massnahme darin bestehen, einen vorgegebenen maximalen Kraftstoffgesamtverbrauch in gleiche Intervalle zu unterteilen und jedem dieser Intervalle eine Kontrolleuchte zuzuordnen, die am Ende des Intervalls erlischt. Durch die Aufteilung der Intervalle kann somit bereits vor Erreichen des maximalen Gesamtverbrauchs eine besonders belastende Fahrweise erkannt werden, da dann die Kontrolleuchten der zugehörigen Intervalle erkennbar schneller erlöschen.

Häufig wird es ausreichend sein, die Kontrolleuchten nur vor dem Start des Fahrzeugmotors einzuschalten und bei oder nach dem Anlassen des Fahrzeugmotors auszuschalten. Bei jedem Startvorgang erhält der Fahrer somit Auskunft, wann in etwa ein Service zu erwarten ist. Er kann seine Fahrweise so einrichten, dass dieser Zeitpunkt möglichst spät liegt. Anderseits wird er während der Fahrt durch die Kontrolleuchten nicht gestört.

Zusätzlich zu den Kontrolleuchten können bei überschreiten des maximalen Kraftstoffgesamtverbrauchs Warnleuchten in gleichen Gesamtverbrauchs-Intervallen bleibend eingeschaltet werden. Der Fahrer erhält dann mit zunehmender Dringlichkeit einen Hinweis auf die Notwendigkeit einer Wartung.

Diese Dringlichkeit kann dadurch verstärkt werden, dass die Gesamtverbrauchs-Intervalle nach überschreiten des maximalen Kraftstoffgesamtverbrauchs etwa halb so gross wie die Intervalle davor sind. In kürzeren Abständen erscheinen um so mehr Warnleuchten, die darüber hinaus ständig daran erinnern, einen Service durchführen zu lassen.

Um zu erreichen, dass auch bei wenig betriebenen Kraftfahrzeugen auf einen Service hingewiesen wird, kann dem maximalen Kraftstoffgesamtverbrauch eine Sollzeit zugeordnet sein, nach deren Ablauf ebenfalls das Signal erscheint. In derartigen Fällen wird der Service infolge von Alterungserscheinungen, beispielsweise der verwendeten Betriebsflüssigkeiten, erforderlich; Erscheinungen, die bei einer durchschnittlichen Betriebsweise nicht ins Gewicht fallen.

Alternativ dazu kann bei Ablauf der Sollzeit ein Warnsignal unabhängig von dem Signal für den Kraftstoffgesamtverbrauch erscheinen. Mit diesem Signal kann beispielsweise auf erforderliche zusätzliche Wartungsarbeiten, wie beispielsweise die Erneuerung des Unterbodenschutzes, hingewiesen werden.

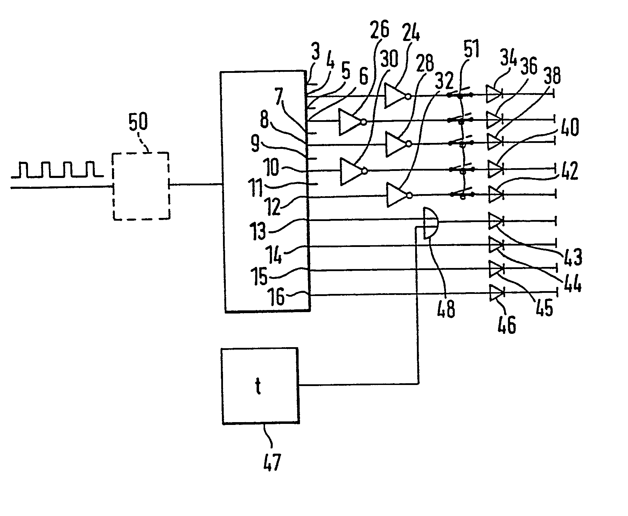

Die Erfindung ist anhand eines in der Zeichnung dargestellten Ausführungsbeispiels weiter erläutert. Die Zeichnung zeigt eine Schaltanordnung für eine Service-Intervall-Anzeigevorrichtung, bei der der Kraftstoffgesamtverbrauch als Servicekriterium dient.

In die Schaltanordnung gelangen Impulse, entsprechend dem verbrauchten Kraftstoff, die beispielsweise mit Hilfe eines Kraftstoff-Durchflussmessers oder eines Gebers für die Stauklappenstellung einer Einspritzanlage mit nachgeschaltetem Analog/Digital-Wandler ausgelöst werden. Die Verbrauchsimpulse gelangen in einen als Schieberegister ausgebildeten Speicher 2, der seine Ausgänge 3 bis 16 im Abstand von 100 l Gesamtverbrauch einschaltet.

An den Ausgängen 4, 6, 8, 10 und 12 sind über Inverter 24, 26, 28, 30 und 32 Leuchtdioden 34, 36, 38, 40 und 42 angeschlossen, die der Reihe nach im Abstand dieser Verbrauchsmengen (200 l) erlöschen. Entsprechend der Fahrweise und den übrigen Fahrbedingungen bleiben die z.B. grünen Leuchtdioden im Verhältnis zu einer Fahrweise mit extremer Belastung des Fahrzeugmotors um so länger eingeschaltet, je schonender der Fahrzeugmotor betrieben wird. Diese Funktion der Anzeigevorrichtung ist dabei weitgehend unabhängig von der zurückgelegten Wegstrecke.

Die weiteren Ausgänge 13 bis 16 des Speichers 2 sind unmittelbar mit Leuchtdioden 43 bis 46 verbunden, die beispielsweise eine gelbe bzw. rote Farbe besitzen. Die Leuchtdiode 43 ist ferner über einen Zeitgeber 47 und ein eingeschaltetes ODER-Glied 48 angesteuert, der nach einer Betriebsdauer von z.B. elf Monaten nach Durchführen der letzten Wartung ein Ausgangssignal liefert. Die Leuchtdiode 42, die nach Verbrauch der maximalen Kraftstoffmenge von 1000 l dauernd leuchtet, wird somit auch nach der durch den Zeitgeber 47 bestimmten Sollzeit eingeschaltet und macht auch in diesem Fall darauf aufmerksam, dass ein Service erforderlich ist.

Die weiteren Leuchtdioden 44 bis 46 verstärken die Dringlichkeit einer durchzuführenden Wartung; sie werden bei 1100, 1200 bzw. 1300 l eingeschaltet.

Zusätzlich zu der reinen Berücksichtigung des Kraftstoffverbrauchs kann auch ein weiterer Parameter, beispielsweise die Betriebsdauer, berücksichtigt werden. Für diesen Parameter ist beispielsweise ein weiterer Zähler entsprechend dem Zähler 2 vorzusehen, der die Betriebsstunden summiert und nach vorgegebenen Intervallen Ausgangssignale liefert. Diese Ausgangssignale können mit den Ausgangssignalen der Ausgänge 4, 6, 8, 10 und 12 des Speichers 2 über ODER-Glieder kombiniert und damit zusätzlich zur Ansteuerung der Leuchdioden 34, 36, 38, 40 und 42 verwendet werden.

Ferner ist es möglich, besonders extreme Belastungen des Fahrzeugmotors zusätzlich zu berücksichtigen. Hierzu kann dem Speicher 2 ein angedeuteter Vorteiler 50 vorgeschaltet sein, in den die Verbrauchsimpulse gelangen. Der Vorteiler ist mit Ausnahme dieser extremen Belastungen, beispielsweise einer extrem hohen oder niedrigen Kühlwassertemperatur, eingeschaltet und verringert dann die Zahl der an den Speicher 2 weitergegebenen Impulse. Ist er hingegen wirksam, so gelangen die Verbrauchsimpulse zahlenmässig unverändert in den Speicher und bewirken ein entsprechend schnelles Auffüllen.

Um eine unnötige Beeinträchtigung des Fahrers durch die Anzeigevorrichtung zu vermeiden, können zumindest die Leuchtdioden 34 bis 42 in Reihe mit einem Öldruckschalter 51 od. dgl. geschaltet sein. Sofern die zugehörigen Gesamtverbrauchs-Intervalle noch nicht überschritten sind, leuchten die Leuchtdioden so lange, bis das Betriebskriterium des Fahrzeugmotors (hier Motoröldruck) erfüllt ist.

## Patentansprüche

1. Service-Intervall-Anzeigevorrichtung für Kraftfahrzeuge, die bei Erreichen eines Parameter-Grenzwertes ein Signal liefert, dadurch gekennzeichnet, dass als Parameter der Kraftstoffgesamtverbrauch dient.

2. Anzeigevorrichtung nach Anspruch 1, dadurch gekennzeichnet, dass der Kraftstoffgesamtverbrauch der einzige berücksichtigte Parameter ist.

3. Anzeigevorrichtung nach Anspruch 1, dadurch gekennzeichnet, dass mindestens ein weiterer Parameter berücksichtigt ist.

4. Anzeigevorrichtung nach einem der Ansprüche 1 bis 3, dadurch gekennzeichnet, dass ein vorgegebener maximaler Kraftstoffgesamtverbrauch in gleiche Intervalle unterteilt ist und das jedem dieser Intervalle eine Kontrolleuchte (34, 36, 38, 40, 42) zugeordnet ist, die am Ende des Intervalls erlischt.

5. Anzeigevorrichtung nach Anspruch 4, dadurch gekennzeichnet, dass die Kontrolleuchten auch bei oder unmittelbar nach dem Anlassen des Fahrzeugmotors erlöschen.

6. Anzeigevorrichtung nach einem der Ansprüche 4 oder 5, dadurch gekennzeichnet, dass bei Überschreiten des maximalen Kraftstoffgesamtverbrauchs Warnleuchten (43 bis 46) in gleichen Gesamtverbrauchs-Intervallen bleibend eingeschaltet werden.

7. Anzeigevorrichtung nach Anspruch 6, dadurch gekennzeichnet, dass die Gesamtverbrauchs-Intervalle nach Überschreiten des maximalen Kraftstoffgesamtverbrauchs etwa halb so gross wie die Intervalle vor diesem Überschreiten sind.

8. Anzeigevorrichtung nach einem der Ansprüche 1 bis 7, dadurch gekennzeichnet, dass dem maximalen Kraftstoffgesamtverbrauch eine Sollzeit (Zeitgeber 47) zugeordnet ist, nach deren Ablauf ebenfalls das Signal erscheint.

9. Anzeigevorrichtung nach Anspruch 8, dadurch gekennzeichnet, dass ein Warnsignal bei Ablauf einer Sollzeit unabhängig von dem Signal für den Kraftstoffgesamtverbrauch erscheint.

## Revendications

1. Indicateur d'intervalle de révision pour des véhicules à moteur qui fournit un signal lorsque la valeur limite d'un paramètre est atteinte, indicateur caractérisé en ce que le paramètre est la consommation totale de carburant.

2. Indicateur selon la revendication 1, caractérisé en ce que la consommation totale de carburant est le seul paramètre pris en compte.

3. Indicateur selon la revendication 1, caractérisé en ce qu'on tient compte d'au moins un autre paramètre.

4. Indicateur selon l'une des revendications 1 à 3, caractérisé en ce qu'une consommation totale maximale de carburant prédéterminée est subdivisée en des intervallles identiques et en ce qu'une diode de contrôle (34, 36, 38, 40, 42) est associée à chacun de ces intervalles, diode qui s'éteint à la fin de l'intervalle.

5. Indicateur selon la revendication 4, caractérisé en ce que les diodes de contrôle s'éteignent également lors du démarrage du moteur du véhicule ou directement après le démarrage.

6. Indicateur selon l'une des revendications 4 ou 5, caractérisé en ce que, lors du dépassement de la consommation totale maximale de carburant, les diodes de signalisation (43-46) restent branchées en permanence dans les intervalles identiques de consommation totale.

7. Indicateur selon la revendication 6, caractérisé en ce que, après le dépassement de la consommation maximale de carburant, les intervalles de consommation sont sensiblement de moitié aussi grands que les intervalles avant le dépassement de cet intervalle de consommation totale.

8. Indicateur selon l'une des revendications 1 à 7, caractérisé en ce qu'une durée de consigne (générateur de temps 47) est associée à la consommation totale maximale de carburant, durée après la fin de laquelle un signal apparaît également.

9. Indicateur selon la revendication 8, caractérisé en ce que, après le déroulement d'une durée de consigne, indépendamment du signal de la consommation totale de carburant, un signal d'avertissement apparaît.

## Claims

1. A service-interval indicating device for motor vehicles which delivers a signal when a parameter limiting value is reached, characterized in that the total fuel consumption serves as the parameter.

2. An indicating device according to Claim 1, characterized in that the total fuel consumption is the only parameter considered.

3. An indicating device according to Claim 1, characterized in that at least one further parameter is considered.

4. An indicating device according to any one of Claim 1 to 3, characterized in that a predetermined maximum total fuel consumption is divided into like intervals, and in that a control light (34, 36, 38, 40, 42) is associated with each of these intervals and is extinguished at the end of the interval.

5. An indicating device according to Claim 4, characterized in that the control lights are extinguished upon or directly after start-up of the vehicle engine.

6. An indicating device according to Claim 4 or 5, characterized in that, when the maximum total fuel consumption is exceeded, warning lights (43 to 46) are switched on a like total consumption intervals and remain switched on.

7. An indicating device according to Claim 6, characterized in that the total consumption intervals, after the maximum total fuel consumption has been exceeded, are approximately half as great as the intervals prior to the maximum total fuel consumption having been exceeded.

8. An indicating device according to any one of Claims 1 to 7, characterized in that a required time (timer 47) is associated with the maximum total fuel consumption, the signal likewise appearing after the required time has elapsed.

9. An indicating device according to Claim 8, characterized in that, after a required time has elapsed, a warning signal appears independently of the signal for the total fuel consumption.